# EUROPEAN PATENT APPLICATION

(11) **EP 3 087 815 A1**
(43) Date of publication of application: **02.11.2016**
(21) Application number: 15165991.9
(22) Date of filing: 30.04.2015
(51) Int. Cl.: A01B 15/16, A01B 23/06

(54) **NOTCHED DISC AND AGRICULTURAL MACHINE WITH SUCH A NOTCHED DISC**

(71) Applicant: Kverneland Group Les Landes Genusson S.A.S., 85130 Les Landes Genusson (FR)
(72) Inventor: Sechet, Arnaud, 85600 La Boissiere de Montaigu (FR); Hulin, Guillaume, 44230 Saint-Sébastien sur Loire (FR); Pasquier, Gaetan, 85110 Sainte-Cécile (FR)
(74) Representative: Schneider, Sascha

(57) **Abstract**

The invention refers to a notched disc (1) with differently shaped notches (2, 3).

## Description

The invention refers to notched discs and agricultural machines with such notched discs.

Various models of discs exist for agricultural machines, which can be classified by their geometry, e.g. flat, conical, or spherical etc. Among these geometries there are plain discs, notched discs, plague discs and other various forms. Document EP 2 232 970 discloses a notched disc according to the state of the art.

Discs can be the main working element or accessories in agricultural machines and can be placed at different location of the machines (front/rear/centre/side etc.). Furthermore these discs are mainly used for cutting residues, tilling soil, leveling the soil before tilling, ridging or digging the soil etc.

Plain discs, that means discs without notches, have compared to notched discs a longer life time (with similar material, thickness and diameter) as no material is removed from the disc to make a notch. Plain discs have also a higher efficiency in cutting residues as the full circumference is used as a continuous cutting edge. Furthermore plain discs have a better cutting surface in the soil with a very even and regular surface. But plain discs have disadvantages for example low traction in the soil.

Notched discs according to the state of the art have a higher penetration capacity in hard soils than plain discs as the down force is concentrated on the material between the notches. Therefore they have a higher traction in the soil. The notches give a better grip in contact with the soil to drive the disc in rotation. But notched discs have disadvantages for example a shorter lifetime than plain discs and less efficiency.

It is therefore the object of the invention to remove the disadvantages of the prior art and especially provide a notched disc and an agricultural machine with a notched disc that have for example a higher efficiency, a longer lifetime and a better traction in the soil.

This object is solved by the notched disc, the agricultural machine and the use of the agricultural machine according to the independent claims.

The main aspect of the invention is that the combination of differently formed notches provides the advantages of plain discs and notched discs without having the disadvantages of the prior art. The notched discs according to the invention are the best compromise of plain and notched discs in terms of longer life time (with similar material, thickness and diameter), a higher efficiency in cutting residues and a better cutting surface in the soil.

Furthermore, the notched disc according to the invention provides a higher penetration capacity even in hard soils and a higher traction in the soil as the differently formed notches give better grip in contact with the soil to drive the disc in rotation. The disc can be used in difficult soil for example wet soil or sticky soil and blockages are avoided.

The notched disc for an agricultural machine, especially a disc harrow, according to the invention comprises a periphery, wherein the periphery comprises differently formed notches. The periphery has a cutting-edge and is during use in contact with the soil. The disc can be flat or cup shaped or have any other form. The disc can be made of any material, for example metal, especially steel.

According to exemplary embodiments of the invention the notches comprise different depths, widths and/or geometric shapes. Advantageously this leads to a longer lifetime, a better traction in the soil and therefore a better grip which leads to less blockages, a higher efficiency in cutting residues and a better cutting surface in the soil which is comparably even with a nearly even surface. Furthermore the disc respectively the notches can be adapted to different sorts of soil for example wet soil, sticky soil, dry soil, heavy soil, light soil and so on.

The notches can have for example circular, semicircular, elliptic and/or semi elliptic shapes. This leads for example to an improved traction in the soil. But the notches can have any other form, too.

According to another embodiment the notches are, especially evenly, distributed over the periphery of the disc. This is advantageous as blockages are avoided and a longer lifetime can be reached.

The disc can comprise at least two, preferably at least three, more preferably at least four, even more preferably at least five, most preferably at least six notches.

Preferably the disc comprises at least two deep notches and at least two flat notches. In a preferred embodiment between two adjacent deep notches at least one, especially at least two, more preferably at least three, even more preferably at least four, most preferably at least five flat notches are arranged.

In a preferred embodiment the deep notches and/or the flat notches are at least partly, preferably completely, arranged equidistantly from each other. This leads advantageously to a more uniform tilling and better grip in the soil.

According to another embodiment the deep notches are at least 1,5 times, preferably at least 2 times, more preferably at least 2,5 times, even more preferably at least 3 times, most preferably at least 3,5 times as deep as the flat notches, wherein especially the deep notches have depths of at least 10 mm, preferably at least 20 mm, more preferably at least 30 mm, even more preferably at least 40 mm, most preferably at least 50 mm.

Especially the deep notches are at least 1,5 times, preferably at least 2 times, more preferably at least 2,5 times, even more preferably at least 3 times, most preferably at least 3,5 times as wide as the flat notches, wherein especially the deep notches have widths of at least 30 mm, preferably at least 60 mm, more preferably at least 90 mm, even more preferably at least 120 mm and most preferably at least 150 mm. These depths and/or widths lead advantageously to an improved grip in the soil.

According to another embodiment the depths of the deep notches are at least 1/60, especially at least 1/50, preferably at least 1/40, more preferably at least 1/30, even more preferably at least 1/20, most preferably at least 1/10 of the diameter of the disc. The diameter of the disc can be for example between 100 and 1000 mm. This leads to an improved traction in the soil.

According to another embodiment the depths of the flat notches are at a maximum 1/10, especially at a maximum 1/20, preferably at a maximum 1/30, more preferably at a maximum 1/40, even more preferably at a maximum 1/50 and most preferably at a maximum 1/60 of the diameter of the disc. This leads advantageously to an improved tilling of the soil.

Another object of the invention refers to an agricultural machine, for example a disc harrow, comprising a plurality of, especially rotatable around a common axis and/or identically formed, discs according to one of the preceding embodiments.

According to another embodiment the machine comprises deep notches and flat notches, wherein the discs are arranged rotatably on the same axis, such that the deep notches of adjacent discs are offset to each other in an angle between 1° and 90°, especially between 10° and 80°, preferably between 20° and 70°, more preferably between 30° and 60°, even more preferably between 35° and 55° and most preferably between 40° and 50°. Advantageously, the machine has a better cutting efficiency and a better grip in the soil. Alternatively, the discs can be rotatably mounted on independent axes.

According to another preferred embodiment, on one common axis notched discs according to the invention and at least one plain disc are arranged. Advantageously, the machine has a better cutting efficiency and a better grip in the soil. Especially, between adjacent notched discs at least one plain disc is arranged.

Another object of the invention refers to a use of a machine according to one of the proceeding embodiments for processing soil, especially in a travel direction. It is referred to the aforementioned description and aspects.

The invention is further described schematically in more detail in the following figures:
- Figure 1a:: shows schematically a notched disc according to an exemplary embodiment of the invention;
- Figure 1b:: shows the disc of figure 1a in perspective view;
- Figure 2:: shows the disc in use when working in a piece of soil;
- Figure 3:: shows an agricultural machine according to the invention,
- Figure 4:: shows schematically the soil after it is worked by the machine according to figure 3,
- Figure 5:: shows schematically an agricultural machine according to another embodiment of the invention and
- Figure 6:: shows schematically the soil after it is worked by the machine according to figure 5.

The same items with the same function are named with the same reference signs.

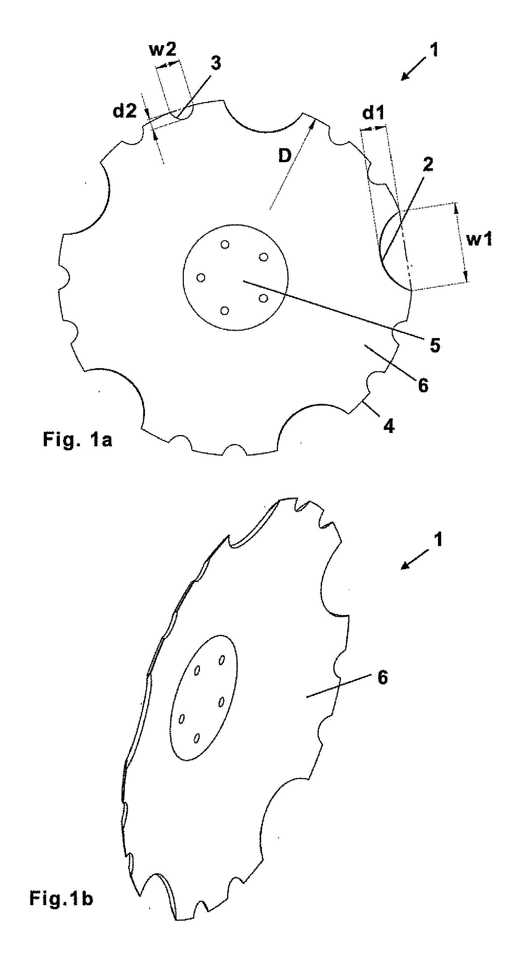

Figure 1a shows a notched disc 1 according to an exemplary embodiment of the invention. The disc 1 comprises a plurality of flat notches 3 and deep notches 2. The differently formed notches 2, 3 are at, least partly, evenly distributed over a periphery 4 of the disc 1. Between adjacent deep notches 2 there are two flat notches 3. The deep notches 2 have a first depth d1 of 42 mm, which is only an example and it can be different from this number. The deep notches 2 have a first width w1 of 129 mm, which can also be different. The disc 1 has a diameter D of 573 mm in this example. The flat notch 3 has a second depth d2 of 17 mm and a second width w2 of 40 mm which is only an example. The notched disc 1 can be rotated around an axis 5. As can be seen in figure 1b, which shows a perspective view of the disc 1 of figure 1a, the disc 1 is not flat but has a concave shape of a disc body 6.

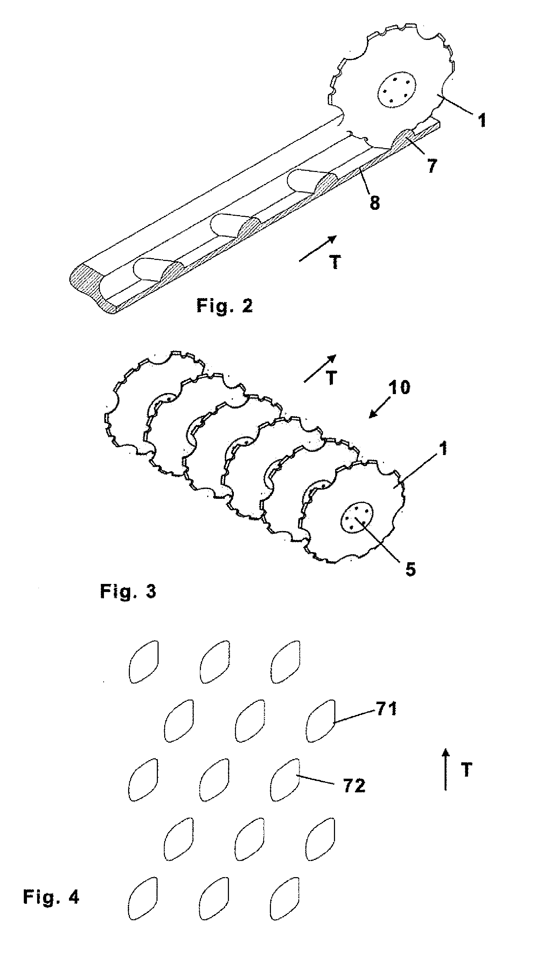

Figure 2 shows schematically the use of the disc 1 moving in a travel direction T in a piece of soil. The disc 1 forms with its deep notches 2 equidistant higher portions 7 and between the higher portions flat portions 8. In the flat portions 8 the disc 1 provides a very good penetration into the soil and with the higher portion 7 the disc has a good grip in the soil to ensure secure rotating without blockage of the disc 1.

Figure 3 shows schematically at least a part of an exemplary agricultural machine 10 according to the invention comprising six notched discs 1 according to the invention arranged on one and the same axis 5. In use the machine 10 forms a pattern in the soil according to figure 4. Higher portions 71, 72 of adjacent notched discs 1 are offset to each other, which means higher portions 71, 72 of adjacent notched discs 1 are arranged on different heights relative to the travel direction T. This has the advantage that in the same point of time three of the notched discs 1 provide optimal penetration in the soil and the other three discs 1 have a good contact in the soil in order to avoid blockage of the discs 1.

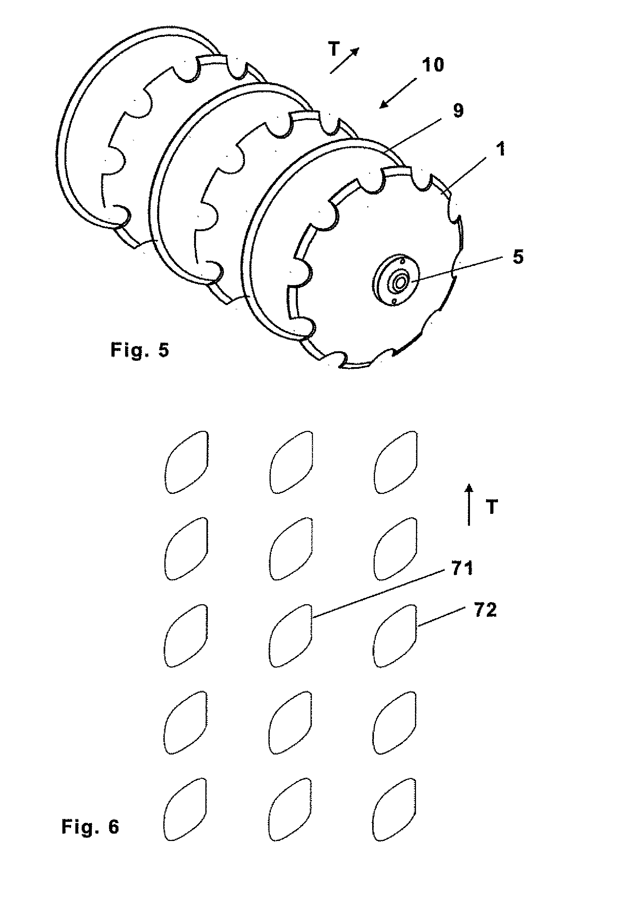

Figure 5 shows schematically at least a part of another agricultural machine 10 according to the invention comprising three notched discs 1 according to the invention and three plain discs 9 on one and the same axis 5. On the axis 5 between two adjacent notched discs 1 one plain disc 9 is arranged. This provides advantageously an improved cutting efficiency in the soil. In use along travel direction T the machine 10 forms a pattern in the soil according to figure 6. Higher portions 71, 72 of adjacent notched discs 1 are arranged on the same height relative to the travel direction T.

### Reference list

- 1: notched disc
- 2: deep notch
- 3: flat notch
- 4: periphery
- 5: axis
- 6: disc body
- 7, 71, 72: higher portion of soil
- 8: flat portion in the soil
- 9: plain disc
- 10: agricultural machine
- D: diameter
- T: travel direction
- w1, w2: width
- d1, d2: depth

## Claims

1. Notched disc (1) for an agricultural machine (10), comprising a periphery (4), wherein the periphery (4) comprises differently formed notches (2, 3).

2. Disc (1) according to claim 1, wherein the notches (2, 3) are formed in circular, semicircular, elliptic and/or semi elliptic shapes.

3. Disc (1) according to one of the preceding claims, wherein the notches (2, 3) comprise different depths (d1, d2), different widths (w1, w2) and/or different geometric shapes.

4. Disc (1) according to one of the preceding claims, wherein the notches (2, 3) are, especially evenly, distributed over the periphery (4) of the disc (1).

5. Disc (1) according to one of the preceding claims, wherein the disc (1) comprises at least two, preferably at least three, more preferably at least four, even more preferably at least five, most preferably at least six notches (2, 3), preferably comprising at least two deep notches (2) and/or at least two flat notches (3), wherein even more preferably the deep notches (2) and/or the flat notches (3) are arranged at least partly, preferably completely, equidistantly from each other.

6. Disc (1) according to claim 5, wherein between two adjacent deep notches (2) at least one, preferably at least two, more preferably at least three, even more preferably at least four, most preferably at least five flat notches (3) are arranged.

7. Disc (1) according to one of the claims 5 to 6, wherein the deep notches (2) are at least 1,5 times, preferably at least 2 times, more preferably at least 2,5 times, even more preferably at least 3 times, most preferably at least 3,5 times as deep as the flat notches (3), wherein especially the deep notches (2) have depths (d1) of at least 10 mm, preferably at least 20 mm, more preferably at least 30 mm, even more preferably at least 40 mm, most preferably at least 50 mm.

8. Disc (1) according to one of the claims 5 to 7, wherein the deep notches (2) are at least 1,5 times, preferably at least 2 times, more preferably at least 2,5 times, even more preferably at least 3 times, most preferably at least 3,5 times as wide as the flat notches (3), wherein especially the deep notches (2) have widths (w1) of at least 30 mm, preferably at least 60 mm, more preferably at least 90 mm, even more preferably at least 120 mm and most preferably at least 150 mm.

9. Disc (1) according to one of the claims 5 to 8, wherein the depths (d1) of the deep notches (2) are at least 1/60, especially at least 1/50, preferably at least 1/40, more preferably at least 1/30, even more preferably at least 1/20, most preferably at least 1/10 of the diameter (D) of the disc (1).

10. Disc (1) according to one of the claims 5 to 9, wherein the depths (d2) of the flat notches (3) are at a maximum 1/10, especially at a maximum 1/20, preferably at a maximum 1/30, more preferably at a maximum 1/40, even more preferably at a maximum 1/50 and most preferably at a maximum 1/60 of the diameter (D) of the disc (1).

11. Agricultural machine (10), especially a disc harrow, comprising a plurality of, especially rotatable around a common axis (5) and/or identically formed, discs (1) according to one of the preceding claims.

12. Machine (10) according to claim 11, comprising deep notches (2) and flat notches (3), wherein the discs (1) are arranged rotatably on the same axis (5), such that the deep notches (2) of adjacent discs (1) are offset to each other in an angle between 1° and 90°, especially between 10° and 80°, preferably between 20° and 70°, more preferably between 30° and 60°, even more preferably between 35° and 55° and most preferably between 40° and 50°.

13. Machine (10) according to claim 11, wherein the discs (1) are rotatably arranged on independent axes.

14. Machine (10) according one of the claims 11 to 12, wherein on one common axis (5) notched discs (1) according to one of the claims 1 to 10 and at least one plain disc (9) are arranged.

15. Use of a machine (10) according to one of the claims 11 to 14 for processing soil, especially in a travel direction (T).
